# EUROPÄISCHE PATENTSCHRIFT

(11) **EP 1 300 327 B1**
(45) Veröffentlichungstag und Bekanntmachung des Hinweises auf die Patenterteilung: **04.05.2005**
(21) Anmeldenummer: 02019949.3
(22) Anmeldetag: 05.09.2002
(51) Int. Cl.: B62J 35/00, B62J 23/00, B62J 25/00

(54) **Kraftstofftank für Motorräder**
Petrol tank for motorcycles
Réservoir à carburant pour motocyclettes

(30) Priorität: 05.10.2001 DE 10149185
(43) Veröffentlichungstag der Anmeldung: 09.04.2003
(73) Patentinhaber: Bayerische Motoren Werke Aktiengesellschaft, 80809 München (DE)
(72) Erfinder: Hundemer, Peter, 84095 Furth (DE)

(56) Entgegenhaltungen:
- EP-A- 0 437 776
- DE-C- 914 941
- FR-A- 1 158 298
- JP-A- 60 172 653
- PATENT ABSTRACTS OF JAPAN vol. 017, no. 417 (M-1457), 4. August 1993 (1993-08-04) -& JP 05 085440 A (SUZUKI MOTOR CORP), 6. April 1993 (1993-04-06)
- PATENT ABSTRACTS OF JAPAN vol. 009, no. 238 (M-416), 25. September 1985 (1985-09-25) -& JP 60 092928 A (YAMAHA HATSUDOKI KK), 24. Mai 1985 (1985-05-24)
- PATENT ABSTRACTS OF JAPAN vol. 2000, no. 09, 13. Oktober 2000 (2000-10-13) -& JP 2000 177408 A (YAMAHA MOTOR CO LTD), 27. Juni 2000 (2000-06-27)

## Beschreibung

Die vorliegende Erfindung betrifft einen Kraftstofftank für Motorräder gemäß dem Oberbegriff des Patentanspruches 1.

Ein derartiger Kraftstofftank ist aus der JP60-172653 bekannt.

Bei einem Motorrad besteht die Gefahr, dass bei einem Sturz der Kraftstofftank beschädigt bzw. im Bereich der "Schlageinwirkung" zerstört wird. Aus Festigkeits- bzw. Sicherheitsgründen besteht der Benzintank daher bei herkömmlichen Motorrädern üblicherweise aus Blech. Blechtanks sind in der Herstellung aber relativ teuer.

Aufgabe der Erfindung ist es, einen Kraftstofftank für Motorräder zu schaffen, der einen robusten Aufbau aufweist und kostengünstig herstellbar ist.

Diese Aufgabe wird durch die Merkmale des Patentanspruchs 1 gelöst. Vorteilhafte Ausgestaltungen und Weiterbildungen der Erfindung sind den Unteransprüchen zu entnehmen.

Das Grundprinzip der Erfindung besteht in einem Kraftstofftank, der aus Kunststoff hergestellt ist und der im Bereich zumindest einer Tankwand ein "Schutzelement" aufweist. Das Schutzelement ist in die Wand des Kraftstoffbehälters "integriert". Es wird bereits bei der Herstellung des Kraftstoffbehälters in das Fertigungswerkzeug eingelegt und in dem zu verstärkenden Wandbereich fixiert. Die Ränder des Schutzelements sind so gestaltet, dass bei der Herstellung des Kraftstoffbehälters ein "Hinterschnitt" entsteht. Das Schutzelement wird also "fester, integraler Bestandteil" des Kraftstoffbehälters.

Das Einlegen des Schutzelements in das Werkzeug kann problemlos bei herkömmlichen Kunststoffverarbeitungsverfahren angewendet werden. Der Kraftstoffbehälter kann beispielsweise im Rotations- oder Blasverfahren hergestellt werden oder aus Kunststoffspritzteilen oder Prägeteilen.

Die "Integration" eines Schutzelements in die Kraftstoffbehälterwand ermöglicht es, Kraftstoffbehälter, die aus Kunststoff hergestellt sind, auch für sturz- bzw. schlaggefährdete Anwendungen einzusetzen, die bisher Kraftstoffbehältern aus Metall, insbesondere Stahl oder Aluminium, vorbehalten waren. Kunststoffkraftstoffbehälter haben gegenüber Metallbehältern den Vorteil, dass die Werkzeugkosten wesentlich geringer sind und dass der Kraftstoffbehälter ein geringeres Geweicht hat. Im Vergleich zu "innenliegenden Kraftstoffbehältern" bzw. durch Karosserieteile geschützten Kraftstoffbehältern wird ein größeres Tankvolumen ermöglicht. Desweiteren können mit Kunststoff selbst ausgefallene Designanforderungen erfüllt werden.

Das Schutzelement dient als "Schlagenergieabsorber". Es ist hinsichtlich seines Absorptionsverhaltens, d.h. hinsichtlich seines Materials und seiner konstruktiven Gestaltung auf die zu erwartende Schlagenergie und die Festigkeit bzw. Steifigkeit des Kraftstoffbehälters abgestimmt.

Das Schutzelement weist eine wabenartige Struktur auf. Die einzelnen Waben sind an einer ihrer beiden Stirnseiten durch eine Bodenwand verschlossen. An der anderen Stirnseite können die Waben offen sein. Das Schutzelement kann so angeordnet sein, dass die Waben zur Tankaußenseite hin offen sind. Das heißt, die Bodenwand liegt auf der dem Tankinneren zugewandten Seite des Schutzelements. Alternativ dazu können die Waben auch innen offen sein, wobei die Bodenwand dann auf der Tankaußenseite liegt. In diesem Fall wird bei der Herstellung des Kraftstofftanks auf die offene Stirnseite der Waben eine "Sperrschicht" aufgebracht, z.B. eine Folie, die verhindert, dass Kunststoff in das Wabeninnere eindringt. Umgekehrt kann die Bodenwand des Schutzelements auch zur Tankinnenseite hin angeordnet sein. Unabhängig davon, wie das Schutzelement angeordnet ist, kann an seiner "Außenseite" ein beliebig gestaltetes "Designelement" angeordnet sein.

Das Schlagenergieabsorptionsverhalten des Schutzelements kann ferner durch die Wahl des verwendeten Materials gezielt beeinflusst werden. Es kann beispielsweise ganz aus einem Kunststoffschaum hergestellt sein. Alternativ dazu kann es auch nur eine Schaumschicht aufweisen. Die wabenartige Struktur kann aus Kunststoff oder aus Metall, z.B. aus Aluminium, hergestellt sein. Die Hohlräume der einzelnen Waben können zusätzlich mit einem Kunststoffschaum gefüllt sein. Zusätzlich zu seiner Schutzfunktion kann das Schutzelement auch selbst als "Stylingelement" gestaltet sein.

Im folgenden wird die Erfindung an Hand von Ausführungsbeispielen im Zusammenhang mit der Zeichnung näher erläutert. Es zeigen:
- Figur 1: einen Schnitt durch eine Kraftstoffbehälterwand mit einem Schutzelement aus Kunststoff mit nach innen offener Wabenstruktur;
- Figur 2: ein Ausführungsbeispiel ähnlich wie Figur 1, jedoch mit nach außen offener Wabenstruktur,
- Figur 3: eine Variante der Erfindung mit einem Schutzelement aus Aluminium mit nach innen offener Wabenstruktur;
- Fig. 4: eine perspektivische Darstellung eines Motorradtanks, in den ein Schutzelement integriert ist.

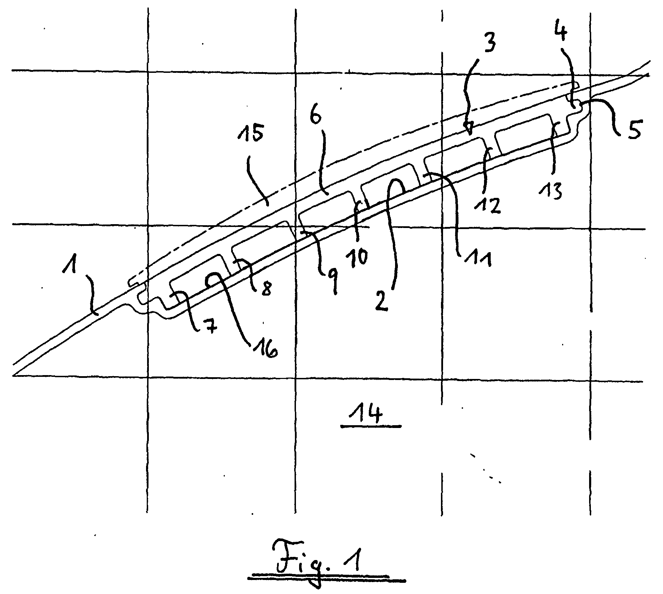

**Figur 1** zeigt einen Schnitt durch eine Kraftstoffbehälterwand 1, die eine Ausnehmung 2 aufweist, in der ein "Schutz- bzw. Verstärkungselement" 3 angeordnet ist. Das Schutzelement 3 dient als "Energieabsorber" und schützt die Kraftstoffbehälterwand 1 vor von außen einwirkenden Schlagkräften. Das Schutzelement 3 weist eine umlaufende Haltenase 4 auf, die formschlüssig in eine nutartige Ausnehmung 5 der Kraftstoffbehälterwand 1 eingreift. Das Schutzelement 3 ist somit unlösbar mit der Kraftstoffbehälterwand 1 verbunden bzw. in die Kraftstoffbehätterwand 1 integriert.

Das Schutzelement 3 ist wabenartig aufgebaut. Es besteht aus einer "Bodenplatte" 6 und mehreren im wesentlichen senkrecht davon abstehenden Wänden 7-13. Die wabenartige Struktur des Schutzelements 3 ist somit zur Kraftstoffbehälterwand 1, d.h. zur Tankinnenseite 14 hin offen.

An der Außenseite des Schutzelementes 3 ist ein beliebig gestaltbares Designelement 15 vorgesehen, das in vielfältiger Weise am Schutzelement 3 befestigt sein kann bzw. einstückig mit dem Schutzelement verbunden sein kann.

Der Kraftstoffbehälter kann aus einem thermoplastischen Kunststoff hergestellt sein, z.B. aus Polyamid. Er kann rotiert bzw. geblasen oder gespritzt sein. Vor der Herstellung des Kraftstoffbehälters wird das Schutzelement 3 in das Werkzeug eingelegt. Die "Öffnungen" des wabenartigen Schutzelements 3 werden bei dem hier gezeigten Ausführungsbeispiel vor der Herstellung des Kraftstoffbehälters mit einer Schutzfolie 16 abgedeckt, die verhindert, dass flüssiger Kunststoff in die Waben eintritt.

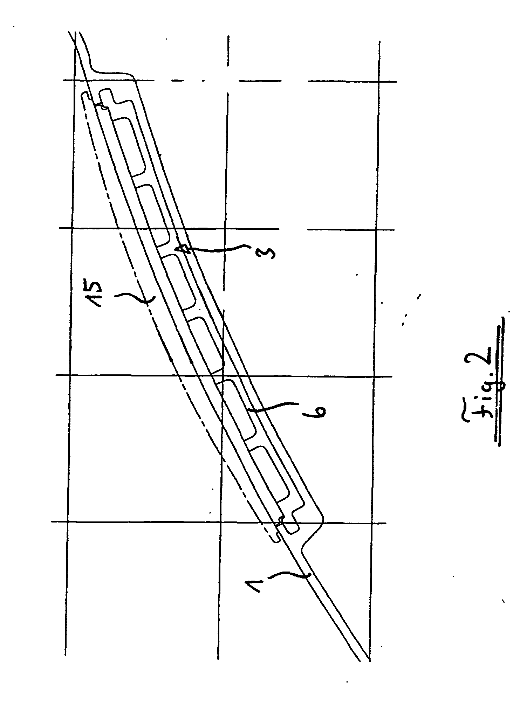

**Figur 2** zeigt ein Ausführungsbeispiel, bei dem das Schutzelement 3 "andersherum" in die Kraftstoffbehälterwand 1 integriert ist. Hier liegt die Bodenplatte 6 des Schutzelements 3 an der Kraftstoffbehälterwand 1 an. Bei dieser Variante ist eine Schutzfolie nicht erforderlich. Entsprechend Figur 1 ist an der Kraftstoffbehälteraußenseite ein Designelement 15 angeordnet, das die "Öffnungen" der wabenartigen Struktur des Schutzelements abdeckt.

In den Figuren 1 und 2 ist das Schutzelement 3 aus Kunststoff hergestellt, was an seinen relativ großen Wandstärken erkennbar ist. Die Wandstärken des Schutzelements 3 liegen bei den gezeigten Ausführungsbeispielen etwa in der Größenordnung der Wandstärke der Kraftstoffbehälterwand 1.

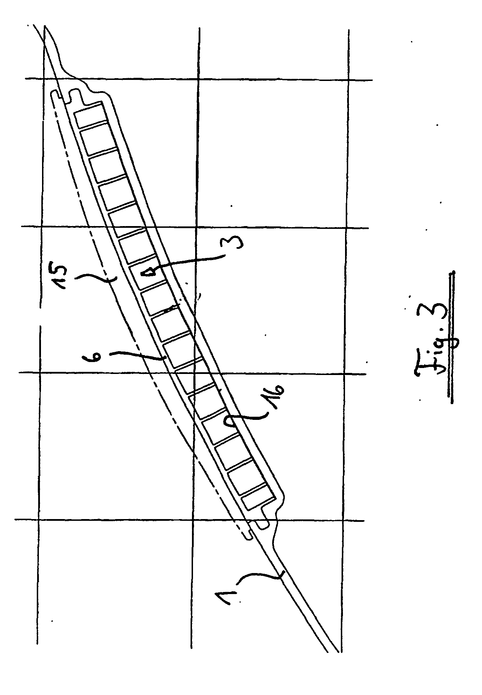

**Figur 3** zeigt ein Ausführungsbeispiel, bei dem das Schutzelement 3 aus Metall, z.B. aus Aluminium hergestellt ist. Das Schutzelement 3 kann beispielsweise ein Aluminiumdruckgussteil sein. Im Vergleich zu den Ausführungsbeispielen der Figuren 1 und 2 sind hier die Wandstärken des Schutzelements 3 geringer als die der Kraftstoffbehälterwand 1. Entsprechend Figur 1 ist auch hier eine Schutzfolie 16 vorgesehen, die bei der Herstellung des Kraftstoffbehälters verhindert, dass Kunststoff in die Waben des Schutzelements 3 eintritt.

Bei den in den Fig. 1-3 gezeigten Ausführungsbeispielen können die "Waben" des Schutzelements 3 zusätzlich mit einem elastischen Material, z.B. einem Kunststoffschaum, gefüllt sein.

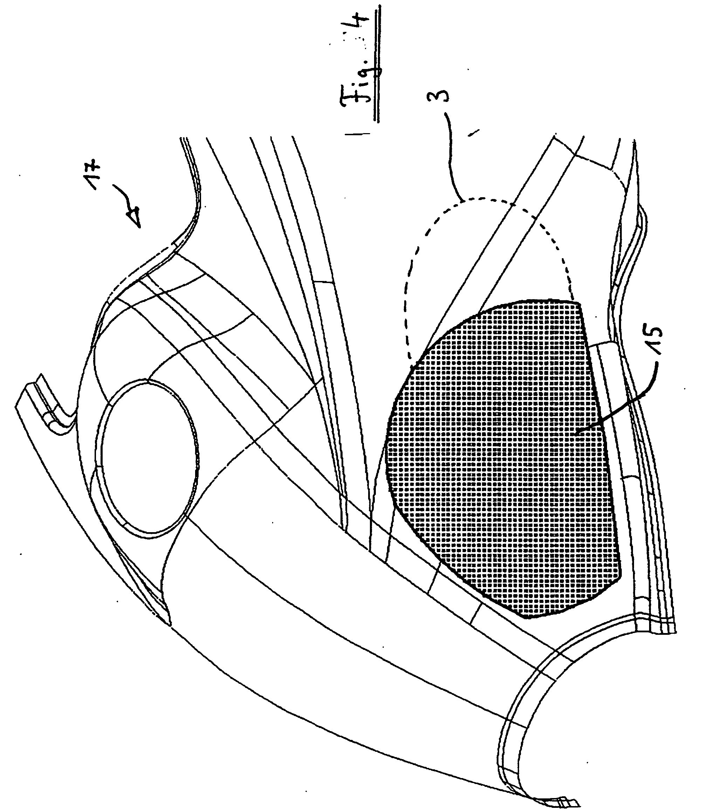

**Figur 4** zeigt eine perspektivische Ansicht eines Motorradtanks 17. Hier ist im vorderen Seitenbereich des Motorradtanks 17 das Designelement 15 angeordnet, unter dem sich das in die Kraftstoffbehälterwand integrierte Schutzelement 3 befindet. Durch das Schutzelement 3 erhöht sich die Festigkeit, insbesondere die Schlag- bzw. Stoßfestigkeit des Motorradtanks 17. Die Verwendung derartiger Schutzelemente 3 ermöglicht es somit auch bei Motorrädern, Kraftstofftanks aus Kunststoff zu verwenden. Allgemein sollte das Schutzelement 3 in dem Bereich des Kraftstofftanks angeordnet sein, der am "schlaggefährdesten" bzw. am aufprallgefährdesten ist. Das Schutzelement 3 erstreckt sich hier über das Designelement 15 nach hinten.

## Patentansprüche

1. Kraftstofftank für Motorräder, wobei der Kraftstofftank (17) aus Kunststoff besteht und an mindestens einer Wand des Kraftstofftanks (17) ein Schutzelement (3) angeordnet ist, das zum Schutz der Kraftstofftankwand vor mechanischen Schlagbelastungen vorgesehen ist,
**dadurch gekennzeichnet, dass**
das Schutzelement (3) eine wabenartige Struktur hat.

2. Kraftstofftank nach Anspruch 1,
**dadurch gekennzeichnet, dass**
das Schutzelement (3) in die Wand (1) des Kraftstofftanks (17) integriert ist.

3. Kraftstofftank nach Anspruch 1 oder 2,
**dadurch gekennzeichnet, dass**
das Schutzelement (3) formschlüssig mit der Wand (1) des Kraftstofftanks (17) verbunden ist.

4. Kraftstofftank nach einem der Ansprüche 1 bis 3,
**dadurch gekennzeichnet, dass**
in der Wand (1) des Kraftstofftanks (17) eine um den Randbereich des Schutzelements (3) laufende nutartige Vertiefung (5) vorgesehen ist, in die eine federartige Erhebung (4) des Schutzelements (3) eingreift.

5. Kraftstofftank nach einem der Ansprüche 1 bis 4,
**dadurch gekennzeichnet, dass**
das Schutzelement (3) eine schlagenergieabsorbierende Struktur hat.

6. Kraftstofftank nach einem der Ansprüche 1 bis 5,
**dadurch gekennzeichnet, dass**
das Schutzelement (3) eine Bodenwand (6) aufweist, von der im wesentlichen senkrecht Seitenwände (7-13) abstehen, die wabenartige Parzellen bilden, wobei die der Bodenwand (6) gegenüberliegende Stirnseite der Parzellen des Schutzelements (3) offen ist.

7. Kraftstofftank nach Anspruch 6,
**dadurch gekennzeichnet, dass**
das Schutzelement (3) so angeordnet ist, dass die Bodenwand (6) zur Außenseite des Kraftstofftanks (17) hin liegt.

8. Kraftstofftank, nach Anspruch 6,
**dadurch gekennzeichnet, dass**
das Schutzelement (3) so angeordnet ist, dass die Bodenwand (6) zum Tankinneren (14) hin liegt.

9. Kraftstofftank nach Anspruch 7,
**dadurch gekennzeichnet, dass**
zwischen der offenen Stirnseite des Schutzelements (3) und der Wand (1) des Kraftstofftanks (17) eine Trennfolie (16) vorgesehen ist, die bei der Herstellung des Kraftstofftanks (17) ein Eindringen von Kunststoff in die Wabenstruktur verhindert.

10. Kraftstofftank nach einem der Ansprüche 1 bis 9,
**dadurch gekennzeichnet, dass**
das Schutzelement (3) aus Kunststoff besteht.

11. Kraftstofftank nach einem der Ansprüche 1 bis 10,
**dadurch gekennzeichnet, dass**
das Schutzelement (3) zumindest teilweise aus einem Kunststoffschaum besteht.

12. Kraftstofftank nach einem der Ansprüche 1 bis 11,
**dadurch gekennzeichnet, dass**
das Schutzelement (3) aus Metall besteht.

13. Kraftstofftank nach einem der Ansprüche 1 bis 9 oder 12,
**dadurch gekennzeichnet, dass**
das Schutzelement (3) aus Aluminium besteht.

14. Kraftstofftank nach einem der Ansprüche 1 bis 13,
**dadurch gekennzeichnet, dass**
an der Kraftstofftankaußenseite am Schutzelement (3) ein Designelement (15) angeordnet ist.

## Claims

1. A fuel tank for motorcycles, wherein the fuel tank (17) is formed of a plastics material and a protective element (3) is disposed on at least one wall of the tank (17) and is adapted to protect the tank wall from mechanical impact stresses, **characterised in that** the protective element (3) has a honeycomb-like structure.

2. A fuel tank according to claim 1, **characterised in that** the protective element (3) is incorporated in the wall (1) of the fuel tank (17).

3. A fuel tank according to claim 1 or 2, **characterised in that** the protective element (3) is positively connected to the wall (1) of the fuel tank (17).

4. A fuel tank according to any of claims 1 to 3, **characterised in that** the wall (1) of the fuel tank (17) has a groove-like recess (5) running round the edge region of the protective element (3) and engaging a spring-like raised portion (4) of the protective element (3).

5. A fuel tank according to any of claims 1 to 4, **characterised in that** the protective element (3) has a structure which absorbs impact energy.

6. A fuel tank according to any of claims 1 to 5, **characterised in that** the protective element (3) has a base wall (6) from which side walls (7 - 13) project substantially at right angles and form honeycomb-like compartments, wherein the endfaces of the compartments of the protective element (3) opposite the base wall (6) are open.

7. A fuel tank according to claim 6, **characterised in that** the protective element (3) is so disposed that the base wall (6) faces the outside of the fuel tank (17).

8. A fuel tank according to claim 6, **characterised in that** the protective element (3) is so disposed that the base wall (6) faces the interior (14) of the tank.

9. A fuel tank according to claim 7, **characterised in that** a separating foil (16) is provided between the open endface of the protective element (3) and the wall (1) of the fuel tank (17) and prevents plastics material from penetrating into the honeycomb structure during production of the tank (17).

10. A fuel tank according to any of claims 1 to 9, **characterised in that** the protective element (3) is of a plastics material.

11. A fuel tank according to any of claims 1 to 10, **characterised in that** the protective element (3) is formed at least partly of a plastics material foam.

12. A fuel tank according to any of claims 1 to 11, **characterised in that** the protective element (3) is of metal.

13. A fuel tank according to any of claims 1 to 9 or 12, **characterised in that** the protective element (3) is of aluminium.

14. A fuel tank according to any of claims 1 to 13, **characterised in that** a design element (15) is disposed on the protective element (3) on the outside of the fuel tank.

## Revendications

1. Réservoir à carburant pour motocyclette ce réservoir (17) étant réalisé en matière plastique, avec sur au moins une paroi du réservoir (17) un élément de protection (3) prévu pour protéger la paroi du réservoir des contraintes mécaniques dues à des chocs,
**caractérisé en ce que**
l'élément de protection (3) a une structure en nid d'abeille.

2. Réservoir selon la revendication 1,
**caractérisé en ce que**
l'élément de protection (3) est intégré à la paroi (1) du réservoir de carburant (17).

3. Réservoir selon la revendication 1 ou 2,
**caractérisé en ce que**
l'élément de protection (3) est relié avec verrouillage par combinaison de formes à la paroi (1) du réservoir à carburant (17).

4. Réservoir selon une des revendications 1 à 3,
**caractérisé en ce que**
dans la paroi (1) du réservoir à carburant (1), et autour de la zone marginale de l'élément de protection (3), il est prévu une cavité (9) en forme de rainure, dans laquelle pénètre une saillie élastique (4) de l'élément de protection (3).

5. Réservoir selon une des revendications 1 à 4,
**caractérisé en ce que**
l'élément de protection (3) a une structure absorbant l'énergie de chocs.

6. Réservoir selon une des revendications 1 à 5,
**caractérisé en ce que**
l'élément de protection (3) présente une paroi de fond (6) sur laquelle font saillie, essentiellement perpendiculairement, des parois latérales (7 - 13) qui forment des parcelles en nid d'abeille, la face frontale de ces parcelles opposée à la paroi de fond (6) étant ouverte.

7. Réservoir selon la revendication 6,
**caractérisé en ce que**
l'élément de protection (3) est disposé de manière que la paroi de fond (6) se trouve vers l'extérieur du réservoir à carburant (17).

8. Réservoir selon la revendication 6,
**caractérisé en ce que**
l'élément de protection (3) est disposé de manière que la paroi de fond (6) se trouve vers l'intérieur (14) du réservoir à carburant.

9. Réservoir selon la revendication 7,
**caractérisé en ce qu'**
entre la face frontale ouverte de l'élément de protection (3) et la paroi (1) du réservoir à carburant (17), il est prévu une pelllicule séparatrice (16) qui empêche, lors de la fabrication du réservoir (17), que de la matière plastique pénètre dans la structure en nid d'abeille.

10. Réservoir selon une des revendications 1 à 9,
**caractérisé en ce que**
l'élément de protection (3) est en matière plastique.

11. Réservoir selon une des revendications 1 à 10,
**caractérisé en ce que**
l'élément de protection (3) est composé au moins en partie d'une matière plastique cellulaire.

12. Réservoir selon une des revendications 1 à 11,
**caractérisé en ce que**
l'élément de protection (3) est en métal.

13. Réservoir selon une des revendications 1 à 9 ou 12,
**caractérisé en ce que**
l'élément de protection (3) est en aluminium.

14. Réservoir selon une des revendications 1 à 13,
**caractérisé en ce que**
sur la face externe du réservoir à carburant, un élément de décor (15) est placé sur l'élément de protection (3).
